# EUROPÄISCHE PATENTSCHRIFT

(11) **EP 0 915 774 B1**
(45) Veröffentlichungstag und Bekanntmachung des Hinweises auf die Patenterteilung: **06.11.2002**
(21) Anmeldenummer: 98930788.9
(22) Anmeldetag: 03.06.1998
(51) Int. Cl.: B60N 2/44

(54) **SITZKLIMATISIERUNGSVORRICHTUNG**
AIR CONDITIONING DEVICE FOR A SEAT
DISPOSITIF DE CLIMATISATION POUR SIEGE

(30) Priorität: 03.06.1997 DE 19723245
(43) Veröffentlichungstag der Anmeldung: 19.05.1999
(73) Patentinhaber: W.E.T. AUTOMOTIVE SYSTEMS AG, 85235 Odelzhausen (DE)
(72) Erfinder: WEISS, Michael, D-83671 Benediktbeuren (DE); RAUH, Hans-Georg, D-82140 Olching (DE); LORENZEN, Günter, D-82140 Olching (DE); SCHULLER, Ferdinand, D-86343 Königsbrunn (DE)
(74) Vertreter: Hano, Christian, Dipl.-Ing.
(86) Internationale Anmeldenummer: EP9803310
(87) Internationale Veröffentlichungsnummer: WO98055340

(56) Entgegenhaltungen:
- EP-A- 0 424 160
- FR-A- 2 572 271
- US-A- 3 738 702
- US-A- 4 413 857
- US-A- 4 853 992
- US-A- 4 923 248
- US-A- 5 226 188

## Beschreibung

Die Erfindung betrifft eine Sitzklimatisierungsvorrichtung nach dem Oberbegriff des Anspruchs 1.

Die im folgenden verwendeten Wörter "Sitz", "Sitzflache", "Sitzbelüftung", "sitzen" und "Sitzklimatisierungsvorrichtung" umfassen sowohl Sitze im engeren Sinne als auch Sitzlehnen, d.h. sie umfassen begrifflich im folgenden auch die Begriffe "Sitzlehne", "Sitzlehnenfläche", "Sitzlehnenbelüftung", "anlehnen" und "Sitzflächenklimatisierungsvorrichtung".

Aus dem Stand der Technik sind verschiedene Sitzheizungsvorrichtungen und auch Sitzklimatisierungsvorrichtungen mit einem Kanalsystem im Sitzschaum bekannt. Beispielsweise offenbart die WO 95/14899 eine aktive Sitzbelüftung mit Kanälen im Sitzschaum. Diese Sitzbelüftung erfordert jedoch einen sehr komplexen Sitzaufbau. Eine flächige, gleichmäßige Luftverteilung ist nicht gewährleistet.

Die DE 42 00 825 A1 offenbart ein Abstandsgewirke im Sitzaufbau. Dieses bietet gegenüber einem Kanalsystem im Sitzschaum den Vorteil eines einfacheren Sitzaufbaus und verbessert die passiven klimatischen Eigenschaften von Fahrzeugsitzen. Für einen ausreichenden Feuchteabtransport auch untererschwerten Umgebungsbedingungen ist jedoch eine aktive Belüftung des Abstandsgewirkes mit Hilfe von Radial- oder Axialgebläsen notwendig. Denkbar ist auch eine Belüftung durch Pumpeffekte im Sitzaufbau, z.B. durch komprimierbare Kanäle im Sitzschaum.

Aus der DE 40 17 707 A1 ist der Aufbau eines Abstandsgewirkes kombiniert mit einer litzenbasierten Autositzheizung bekannt. Allerdings sind hierbei die Abstände zwischen den Heizleitern so groß, daß keine Erwärmung der durch das Abstandsgewirke strömenden Luft bei aktiver Belüftung erfolgt.
Dies kann aufgrund von Abkühlungseffekten nachteilige physiologische Folgen für einen den Sitz Benutzenden haben.

Die DE 42 33 118 A1 offenbart eine Heizmatte aus Kohlenstoffasern, die zwar flexibel, jedoch nicht in Quer- und Längsrichtung elastisch ist. Zudem erfordert die Herstellung der Heizmatte einen hohen Kohlenstoffverbrauch und damit hohe Materialkosten.

Die DE 34 23 657 A1 offenbart eine Sitzklimatisierungsvorrichtung nach dem Oberbegriff des Anspruchs 1 mit einem unter einer Sitzfläche angeordneten luftdurchlässigen Polsterkissen und einem zwischen der Sitzfläche und dem Polsterkissen angeordneten Plattenheizelement. Diese Sitzklimatisierungsvorrichtung stellt eine Kombination einer Sitzheizung mit bestem Komfortniveau hinsichtlich Aufheizgeschwindigkeit, homogener Wärmeverteilung und Elastizität mit einer Klimaschicht zur Sitzbelüftung dar. Dabei werden folgende Funktionen kombiniert:
- Luftführung und gleichmäßige Luftverteilung
- Konventionelle Sitzheizung ohne Sitzbelüftung
- Aufheizung der zur Sitzbelüftung zugeführten Luft auf ein physiologisch unbedenkliches Temperaturniveau.

Nachteilig bei der aus der DE 34 23 657 A1 bekannten Sitzklimatisierungsvorrichtung ist jedoch, daß der Grundkörper, in diesem Falle also das Polsterkissen, Polsterdicke hat und deshalb die Sitzklimatisierungsvorrichtung stets unmittelbar im Zusammenhang mit jedem einzelnen Sitz separat gefertigt werden muß.

Aus der US-A-4 413 857 ist ein Sitzkissen bekannt, das einen flexiblen Grundkörper umfasst, der auf einer Seite ein elektrisches Heizelement und auf der anderen Seite mehrere Löcher aufweist, durch die Luft geblasen wird. Der Grundkörper weist einen Kern aus elastischem Material auf, der eine Grundplatte mit mehreren gleich verteilten Vorsprüngen umfasst. Hierdurch wird die Flexibilität verbessert, damit sich das Sitzkissen an die Form einer Person und an eines Fahrzeugsitzes anpassen kann. Andererseits wird verhindert, dass der Kern so komprimiert wird, dass keine Luft mehr durchströmen kann. Da die Vorsprünge gleich verteilt sind, unterscheidet sich die Luftdurchlässigkeit der von einer Person belasteten Bereiche von der Luftdurchlässigkeit der unbelasteten Bereiche, was zu einem erhöhten Temperaturgradient in belasteten Zustand führt.

Die FR-A-2 572 271 beschreibt einen Fahrzeugsitz mit einem Sitzkissen, auf dessen Oberseite ein Grundkörper angeordnet ist, der ein Heizelement sowie eine luftdurchlässige Schicht aufweist. Da über eine ungleichmäßige Luftdurchlässigkeit der Schicht in nichts erwähnt ist, ist davon auszugehen, daß diese Schicht eine konstante Luftdurchlässigkeit aufweist. Wenn eine Person auf dem aus bekannten Sitz Platz nimmt, werden die Bereiche der Schicht, die von der Person belastet werden, stärker komprimiert als die unbelasteten Bereiche. Hierdurch . ändert sich die Luftdurchlässigkeit in den belasteten Bereichen, so daß hohe Temperaturgradienten erreicht werden.

Der Erfindung liegt die Aufgabe zugrunde, mit konstruktiv einfachen Mitteln eine Sitzklimatisierungsvorrichtung zu schaffen, deren Grundkörper im belasteten Zustand geringe Temperaturgradienten aufweist.

Diese Aufgabe wird durch eine Sitzklimatisierungsvorrichtung mit den Merkmalen des Patentanspruchs 1 gelöst. Vorteilhafte Weiterbildungen der erfindungsgemäßen Sitzklimatisierungsvorrichtung sind Gegenstand der Patentansprüche 2 bis 10.

Da bei der erfindungsgemäßen Sitzklimatisierungsvorrichtung die Luftdurchlässigkeit im belasteten Zustand im wesentlichen überall gleich ist, werden hohe Temperaturgradienten im belasteten Zustand vermieden.

Die erfindungsgemäße Klimatisierungsvorrichtung kann an ihrer von der Sitzfläche abgewandten und/oder an ihrer der Sitzfläche zugewandten Seite eine wärmereflektierende Schicht aufweisen. Durch diese warmereflektierende Schicht wird die vom Heizelement ausgehende Wärmestrahlung reflektiert, und die unter und/oder über der Sitzklimatisierungsschicht befindlichen weiteren Sitzschichten werden vor der Wärmestrahlung geschützt. Den gleichen Vorteil erreicht man, wenn der Grundkörper aus einen Abstandgewirke oder aus einem Gummihaar oder aus einem Monofilgewirr oder aus einem vertikal orientierten Vlies oder aus einem reticulierten Schaum oder aus wärmereflektierend beschichteten Fasern besteht.

Ausführungsbeispiele der erfindungsgemäßen Sitzklimatisierungsvorrichtung werden nachfolgend anhand von Figuren beschrieben. Es zeigt:
- Fig. 1: einen Teilquerschnitt eines ersten Sitzes mit einem ersten Ausführungsbeispiel der erfindungsgemäßen Sitzklimatisierungsvorrichtung,
- Fig. 2: einen Teilquerschnitt eines zweiten Sitzes mit einem zweiten Ausführungsbeispiel der erfindungsgemäßen Sitzklimatisierungsvorrichtung und
- Fig. 3: ein drittes Ausführungsbeispiel der erfindungsgemäßen Sitzklimatisierungsvorrichtung.

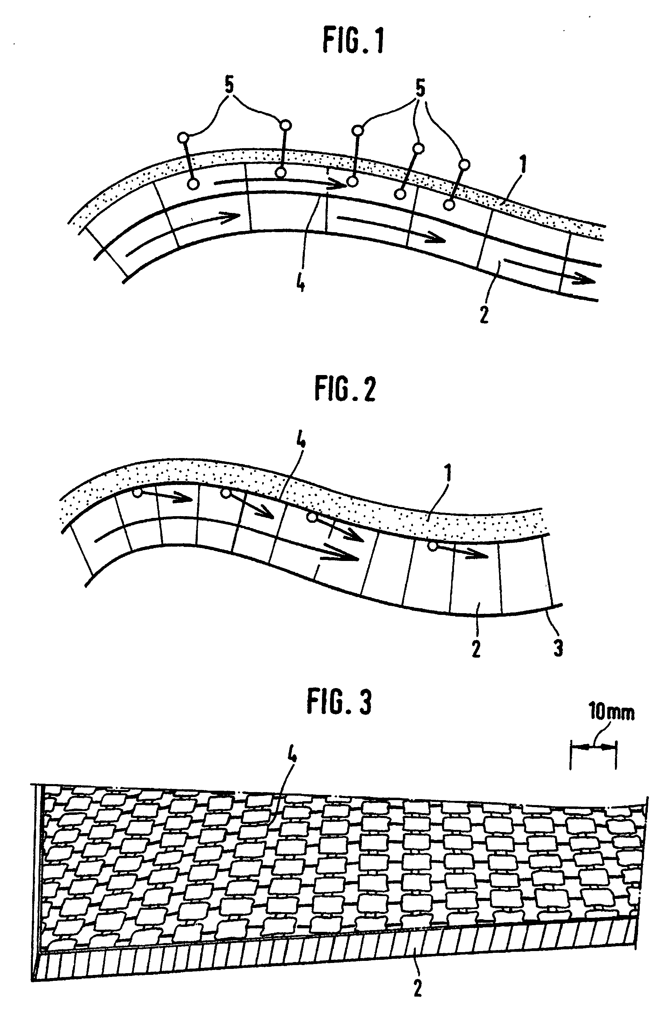

Ein gleichmäßiger, flächig verteilter Luftstrom ist Voraussetzung für eine komfortable, aktive Sitzbelüftung. Durch Einsatz einer luftdurchlössigen Materialschicht als mattenartiger Grundkörper 2 einer erfindungsgemäßen Sitzklimatisierungsvorrichtung wird die dafür nötige Querströmung der Luft unter einer Sitzfläche 1 gewährleistet. In den Fig. 1 und 2 ist die Querströmung der Luft durch die im Grundkörper 2 von links nach rechts zeigenden Pfeile angedeutet.

Der Grundkörper 2 kann z.B. aus Abstandsgewirken, Gummihaar, Monofilgewirr, vertikal orientierten Vliesen, reticuliertem Schaum oder wärmereflektierend beschichteten Fasern bestehen. Seine Luftdurchlässigkeit beträgt in Normalenrichtung, d.h. in Richtung quer zu seiner flächenhaften Ausdehnung, vorzugsweise 300 l/s bis 800 l/s bei einem Differenzdruck von 100 Pa bezogen auf eine Fläche von 1 dm², und seine Stauchhärte ist vorzugsweise 10 kPa bis 15 kPa. Vorzugsweise hat der Grundkörper eine Dicke von 5 mm bis 20 mm. Bei dem in Fig. 3 gezeigten Ausführungsbeispiel der erfindungsgemäßen Sitzklimatisierungsvorrichtung beträgt die Dicke des mattenartigen Grundkörpers 2 7 mm.

Zur erfindungsgemäßen Sitzklimatisierungsvorrichtung gehört ferner ein mattenartiges Heizelement 4, das, wie in Fig. 2 und 3 gezeigt, zwischen der Sitzfläche 1 und dem Grundkörper 2 oder, wie in Fig. 1 dargestellt; in dem Grundkörper 2 angeordnet sein kann. Der Grundkörper 2 und das Heizelement 4 sind im wesentlichen zueinander parallel orientiert angeordnet und in Bezug auf die Flächenerstreckung im wesentlichen gleich groß.

Um die Sitzfläche 1 und/oder unter dem Grundkörper 2 liegende Sitzschichten stärker vom Wärmeinhalt der Kombination aus Heizelement 4 und Grundkörper 2 zu trennen, kann zur Minimierung der entsprechend abgegebenen Wärmestrahlung an der der Sitzfläche 1 zugewandten und/oder an der von der Sitzfläche 1 abgewandten Seite der erfindungsgemäßen Sitzklimatisierungsvorrichtung eine wärmereflektierende Schicht 3, z.B. eine Aluminiumschicht, angeordnet werden. Fig. 2 zeigt ein Ausführungsbeispiel einer erfindungsgemäßen Sitzklimatisierungsvorrichtung mit einer an der von der Sitzfläche 1 abgewandten Seite angebrachten wärmereflektierenden Schicht 3. Anstelle oder zusätzlich zu dieser in Fig. 2 dargestellten wärmereflektierenden Schicht 3 ist bei anderen Ausführungsbeispielen der erfindungsgemäßen Sitzklimatisierungsvorrichtung eine derartige wärmereflektierende Schicht über dem Heizelement 4, d.h. also zwischen dem Heizelement 4 und der Sitzfläche 1 angeordnet. Die wärmereflektierende Schicht 3 kann z.B. als Folie ausgebildet oder eine entsprechende Beschichtung des Grundkörpers 2 sein.

Die Sitzfläche 1 kann, wie in Fig. 2 dargestellt, luftdurchlässig sein. Um einen guten Feuchteabtransport zu gewährleisten, ist jedoch die Verwendung luftdurchlässiger Bezugsmaterialien nötig. Hierbei kann es sich um Stoff oder perforiertes Leder handeln. Fig. 1 zeigt einen Teilquerschnitt eines Sitzes mit einem Ausführungsbeispiel der erfindungsgemäßen Sitzklimatisierungsvorrichtung und einer luftdurchlässigen Sitzfläche 1. Die durch die Sitzfläche 1 hindurchgehende Luftströmung ist mit dem Bezugszeichen 5 kenntlich gemacht.

Prinzipiell ist jedoch zu bemerken, daß auch luftundurchlässiges Bezugsmaterial wie in dem Sitz aus Fig. 2 mittels der erfindungsgemäßen Sitzklimatisierungsvorrichtung so temperiert werden kann, daß einer Feuchtebildung entgegengewirkt wird.

Weiter kann der Grundkörper 2 eine partiell unterschiedliche Luftdurchlässigkeit aufweisen. Dieses ist vorteilhaft, da die Luftdurchlässigkeit generell eine Funktion der Druckbelastung durch das Gewicht des Passagieres ist. Die partiell unterschiedliche Luftdurchlässigkeit kann zum Beispiel durch lokal unterschiedliche Dichten des Grundkörpermaterials oder durch Abdeckmasken erreicht werden. Während sich lokal unterschiedliche Dichten des Grundkörpermaterials sowohl auf die Querströmung der Luft als auch auf die durch die Sitzfläche 1 hindurchgehende Luftströmung 5 auswirken, beeinflussen Abdeckmasken im wesentlichen lediglich die durch die Sitzfläche 1 hindurchgehende Luftströmung 5.

Da der Sitzpassagier mit der Sitzfläche 1 direkt in Berührung kommt, ist eine Steuerung der Temperatur notwendig, um physiologische Risiken, z.B. durch Unterkühlung des Passagiers, auszuschließen.

Die Temperierung der Luft bzw. der Sitzfläche 1 geschieht mit dem Heizelement 4. Dabei ist es wichtig, daß der Heizleiter eine gewisse Mindestdichte in der Fläche belegt. Besonders vorteilhaft ist es, das Heizelement 4 als Flächenheizelement so auszubilden, daß von jedem beliebigen Punkt des Flächenheizelements aus gesehen der Abstand zu einem Heizleiter nicht mehr als 1 cm beträgt. Ist z.B. ein Heizdraht nur wellenförmig verlegt, so verbleiben in der Regel große unbeheizte Bereiche, so daß die Luft nicht ausreichend erwärmt werden kann. Zur Verwenduung in der erfindungsgemäßen Sitzklimatisierungsvorrichtung geeignet ist z.B. ein Heizelement gemäß Patent DE 43 21 474, dessen wesentliches Merkmal eine flächig homogene Heizleistung ist. Bei gleich großer beheizter Fläche sind gegenüber einer litzenbasierten Heizung bei dieser Heizung um den Faktor 15 mehr Heizleiter untergebracht. Damit ist gewährleistet, daß die gesamte durch den Grundkörper 2 strömende Luft erwärmt wird und somit keine kalten Zonen auftreten.

Als Heizelement 4 kommen zum Beispiel in Frage:
- Elektrisch leitfähige homogene Schichten oder Folien, gelocht oder geschlitzt,
- elektrisch leitfähige Textilien,
- Heizleiter parallel oder in Netzstruktur angeordnet,
so daß mindestens 100 m Heizleiter pro Quadratmeter Heizelement 4 vorhanden sind.

Das Heizelement 4 kann mit dem Grundkörper 2 auf verschiedene Weise kombiniert werden. Möglich ist z.B., daß
- das Heizelement 4 beim Herstellungsprozeß des Grundkörpermaterials in dieses eingebracht wird,
- das Heizelement 4 nachträglich auf den Grundkörper 2 aufgewirkt wird, oder
- das Heizelement 4 als eigenständige Baugruppe auf den Grundkörper 2 aufgebracht wird.
Durch eine entsprechende Regelung des Heizelementes 4 mit Hilfe eines oder mehrerer Temperaturfühler, die im Luftstrom plaziert sind, kann die Temperatur der ausströmenden Luft 5 bzw. der Sitzfläche 1 in einem komfortablen und physiologisch unbedenklichen Bereich gehalten werden.

Als Heizleiter werden aus Gründen der mechanischen, chemischen und elektrochemischen Beanspruchungen bevorzugt Carbonmultifilamente oder Carbonfaser-Mischgarne verwendet.

## Patentansprüche

1. Sitzklimatisierungsvorrichtung mit
- einem unter einer Sitzfläche (1) angeordneten luftdurchlässigen Grundkörper (2) und
- einem in dem Grundkörper (2) oder zwischen der Sitzfläche (1) und dem Grundkörper (2) angeordneten Heizelement (4), wobei der Grundkörper (2) und das Heizelement (4) mattenartig ausgebildet, im wesentlichen zueinander parallel orientiert angeordnet und in Bezug auf die Flächenerstreckung gleich groß sind,
**dadurch gekennzeichnet, daß**
wenigstens ein Bereich des Grundkörpers (2), der im wesentlichen durch eine auf dem zugehörigen Sitz sitzende Person abgedeckt wird, mit einer höheren Luftdurchlässigkeit im unbelasteten Zustand versehen wird als der restliche Bereich des Grundkörpers (2), so dass die Luftdurchlässigkeit des Grundkörpers (2) im belasteten Zustand im wesentlichen überall gleich ist.

2. Sitzklimatisierungsvorrichtung nach Anspruch 1, **dadurch gekennzeichnet, daß** das Heizelement (4) ein Flächenheizelement ist, das so ausgebildet ist, daß von jedem beliebigen Punkt des Flächeneizelements aus gesehen der Abstand zu einem Heizleiter nicht größer als 1 cm ist.

3. Sitzklimatisierungsvorrichtung nach einem der vorhergehenden Ansprüche, **dadurch gekennzeichnet, daß** der Grundkörper (2) in Normalenrichtung eine Luftdurchlässigkeit von 300 l/s bis 800 l/s bei einem Differenzdruck von 100 Pa bezogen auf eine Fläche von 1 dm² hat.

4. Sitzklimatisierungsvorrichtung nach einem der vorhergehenden Ansprüche, **dadurch gekennzeichnet, daß** die Dicke des Grundkörpers (2) 5 mm bis 20 mm beträgt.

5. Sitzklimatisierungsvorrichtung nach einem der vorhergehenden Ansprüche, **dadurch gekennzeichnet, daß** die Stauchhärte des Grundkörpers (2) 10 kPa bis 15 kPa beträgt.

6. Sitzklimatisierungsvorrichtung nach einem der vorhergehenden Ansprüche, **dadurch gekennzeichnet, daß** der Grundkörper (2) aus einem Abstandsgewirke oder aus Gummihaar oder aus einem Monofilgewirr oder aus einem vertikal orientierten Vlies oder aus einem reticulierten Schaum oder aus wärmereflektierend beschichteten Fasern besteht.

7. Sitzklimatisierungsvorrichtung nach Anspruch 6, bei welcher der Grundkörper (2) aus wärmereflektierend beschichteten Fasern besteht, **dadurch gekennzeichnet, daß** die wärmereflektierende Beschichtung eine Aluminiumbeschichtung ist.

8. Sitzklimatisierungsvorrichtung nach einem der vorhergehenden Ansprüche, **dadurch gekennzeichnet, daß** sie an ihrer von der Sitzfläche abgewandten und/oder an ihrer der Sitzfläche zugewandten Seite eine wärmereflektierende Schicht (3) aufweist.

9. Sitzklimatisierungsvorrichtung nach Anspruch 8, **dadurch gekennzeichnet, daß** die wärmereflektierende Schicht (3) eine Aluminiumschicht ist.

10. Sitzklimatisierungsvorrichtung nach einem der vorhergehenden Ansprüche, **dadurch gekennzeichnet, daß** das Heizelement (4) aus einem Carbonmultifilament oder aus einem Carbonfaser-Mischgarn besteht.

## Claims

1. An air-conditioning device for a seat with
- an air-permeable base member (2) disposed under a seat surface (1) and
- a heating element (4) disposed in the base member (2) or between the seat surface (1) and the base member (2), wherein the base member (2) and the heating element (4) are of matt-type design, are arranged directed substantially parallel to one another and are of equal size in respect of their surface extension,
**characterised in that**
at least one portion of the base member (2), which is substantially covered by a person sitting on the associated seat, is provided with higher air-permeability in the unladen condition than the remaining portion of the base member (2) so that the air-permeability of the base member (2) is substantially equal overall in the laden condition.

2. An air-conditioning device for a seat according to claim 1, **characterised in that** the heating element (4) is a panel heating element which is so designed that, viewed from any point of the panel heating element, the distance from a heating conductor is not greater than 1 cm.

3. An air-conditioning device for a seat according to any one of the preceding Claims, **characterised in that**, in the normal direction, the base member (2) has an air-permeability of 300 l/s to 80 l/s with a pressure difference of 100 Pa in relation to an area of 1 dm².

4. An air-conditioning device for a seat according to any one of the preceding Claims, **characterised in that** the thickness of the base member (2) is 5 mm to 20 mm.

5. An air-conditioning device for a seat according to any one of the preceding Claims, **characterised in that** the compression hardness of the base member (2) is 10 kPa to 15 kPa.

6. An air-conditioning device for a seat according to any one of the preceding Claims, **characterised in that** the base member (2) consists of a spaced apart knitted fabric or of rubber hair or of tangled monofilaments or of a vertically oriented non-woven fabric or a reticulated foam or of heat-reflecting coated fibres.

7. An air-conditioning device for a seat according to claim 6, in which the base member (2) consists of heat-reflecting coated fibres, **characterised in that** the heat-reflecting coating is an aluminium coating.

8. An air-conditioning device for a seat according to any one of the preceding Claims, **characterised in that** on its side remote from the seating surface and/or on its side nearest the seating surface it has a heat-reflecting layer (3).

9. An air-conditioning device for a seat according to Claim 8, **characterised in that** the heat-reflecting layer (3) is an aluminium layer.

10. An air-conditioning device for a seat according to any one of the preceding Claims, **characterised in that** the heating element (4) comprises a carbon multifilament or a carbon fibre mixed thread.

## Revendications

1. Dispositif de climatisation pour siège, avec
- un corps de base (2) perméable à l'air, disposé en dessous d'une surface de siège (1) et
- un élément chauffant (4) disposé dans le corps de base (2) ou entre la surface de siège (1) et le corps de base (2), le corps de base (2) et l'élément chauffant (4) étant en forme de natte, étant disposés substantiellement de manière orientée parallèlement l'un à l'autre et ayant la même taille en ce qui concerne l'étendue de surface,
**caractérisé en ce que**
au moins une partie du corps de base (2), qui est substantiellement recouverte par une personne assise sur le siège correspondant, est munie d'une perméabilité à l'air à l'état non chargé supérieure à la partie restante du corps de base (2), de sorte que la perméabilité à l'air du corps de base (2) à l'état chargé est substantiellement la même partout.

2. Dispositif de climatisation pour siège selon la revendication 1, **caractérisé en ce que** l'élément chauffant (4) est un élément chauffant électrique en forme de bande conductrice formé de telle manière que, vu de n'importe quel point de l'élément chauffant électrique en forme de bande conductrice, l'écartement par rapport à un conducteur électrique n'est pas supérieur à 1 cm.

3. Dispositif de climatisation pour siège selon l'une des revendications précédentes, **caractérisé en ce que** le corps de base (2) a, en direction normale, une perméabilité à l'air de 300 l/s à 800 l/s par une pression différentielle de 100 Pa par rapport à une surface de 1 dm².

4. Dispositif de climatisation pour siège selon l'une des revendications précédentes, **caractérisé en ce que** l'épaisseur du corps de base (2) est de 5 mm à 20 mm.

5. Dispositif de climatisation de siège selon l'une des revendications précédentes, **caractérisé en ce que** la la résistance à la compression du corps de base (2) est de 10 kPa à 15 kPa.

6. Dispositif de climatisation de siège selon l'une des revendications précédentes, **caractérisé en ce que** le corps de base (2) est constitué d'un tricot d'écartement ou de cheveux en caoutchouc ou d'un tricot monofil ou d'un non-tissé orienté verticalement ou d'une mousse réticulée ou de fibres en couches réfléchissant la chaleur.

7. Dispositif de climatisation de siège selon la revendication 6, dans lequel le corps de base (2) est constitué de fibres en couches réfléchissant la chaleur, **caractérisé en ce que** le revêtement réfléchissant la chaleur est un revêtement en aluminium.

8. Dispositif de climatisation de siège selon l'une des revendications précédentes, **caractérisé en ce qu'**il présente une couche (3) réfléchissant la chaleur sur son côté détourné de la surface de siège et/ou sur son côté tourné vers la surface de siège.

9. Dispositif de climatisation selon la revendication 8, **caractérisé en ce que** la couche (3) réfléchissant la chaleur est une couche d'aluminium.

10. Dispositif de climatisation selon l'une des revendications précédentes, **caractérisé en ce que** l'élément chauffant (4) est constitué d'un multi-filament de carbone ou d'un fil mixte en fibres de carbone.
